# EUROPÄISCHE PATENTSCHRIFT

(11) **EP 4 032 651 B1**
(45) Veröffentlichungstag und Bekanntmachung des Hinweises auf die Patenterteilung: **18.02.2026**
(21) Anmeldenummer: 21214042.0
(22) Anmeldetag: 13.12.2021
(51) Int. Cl.: B23K 11/24, B23K 9/10

(54) **WIDERSTANDSSCHWEISSVORRICHTUNG UND WIDERSTANDSSCHWEISSVERFAHREN**
RESISTANCE WELDING APPARATUS AND RESISTANCE WELDING METHOD
DISPOSITIF DE SOUDAGE PAR RÉSISTANCE ET PROCÉDÉ DE SOUDAGE PAR RÉSISTANCE

(30) Priorität: 07.01.2021 DE 102021200066
(43) Veröffentlichungstag der Anmeldung: 27.07.2022
(73) Patentinhaber: Robert Bosch GmbH, 70442 Stuttgart (DE)
(72) Erfinder: Scholz, Reinhard, 64711 Erbach (DE)

(56) Entgegenhaltungen:
- CN-A- 110 402 536
- DE-B3- 102007 042 771
- US-A1- 2020 324 359

## Beschreibung

Die vorliegende Erfindung bezieht sich auf eine Widerstandsschweißvorrichtung und ein Widerstandschweißverfahren zum Widerstandsschweißen mindestens eines Bauteils.

CN 110 402 536 A zeigt eine Schweißstromquelle zur Bereitstellung eines Schweißstroms und einer Schweißspannung an einem Ausgang für die Durchführung eines Lichtbogenschweißverfahrens. Die Schweißstromquelle soll eine möglichst hohe Ausgangsspannung im Leerlauf bereitstellen, um ein sicheres Zünden eines Lichtbogens für die Durchführung des Lichtbogenschweißverfahrens zu gewährleisten. Die Schweißstromquelle hat einen Schweißtransformator mit zwei Sekundärwicklungen und fünf Ausgängen. Beide Sekundärwicklungen haben einen Mittelabgriff. Die zweite Sekundärwicklung ist an beiden Enden mit einer Strombegrenzungsdrossel verbunden.

Schweißen, insbesondere Widerstandsschweißen, von verschiedenen Blechkombinationen wird beispielsweise in der automatisierten Fertigung eingesetzt. Beispielsweise werden bei Fertigungsstraßen für Möbel, Heizkörper, usw., mit Hilfe eines Schweißwerkzeugs der Schweißvorrichtung metallische Teile durch Schweißen verbunden. In der automatisierten Fahrzeugfertigung werden Schweißvorrichtungen genutzt, um an beispielsweise einer Karosserie eines Fahrzeugs, wie Kraftfahrzeug, Lastkraftwagen, Flugzeug, usw., mindestens eine Schweißverbindung herzustellen.

Alternativ oder zusätzlich kann eine Widerstandsschweißvorrichtung in der Einzelfertigung zum Einsatz kommen.

Eine solche Schweißvorrichtung hat eine Gleichrichterschaltung zum Zuführen eines Gleichstroms zu dem Schweißwerkzeug. Die Gleichrichterschaltung kann als Diodengleichrichter ausgestaltet sein. Um die Effizienz der Gleichrichterschaltung zu steigern, kann die Gleichrichterschaltung alternativ vier Thyristoren verwendet. Hierbei sind statt jeder Diode des Diodengleichrichters zwei antiparallele Thyristoren eingesetzt. Jedoch benötigt die Gleichrichterschaltung mit vier Thyristoren im Vergleich zu einem Diodengleichrichter den doppelten Bauraum.

Durch den Gleichstrom beim Schweißen können Magnetisierungseffekte der geschweißten Teile bzw. Bauteile auftreten. In Folge dessen wird die Weiterverarbeitung der geschweißten metallischen Bauteile erschwert. Durch die mögliche Magnetisierung von Anlagenteilen kann es zu Verschmutzung und Fehlfunktionen in der Schweißanlage kommen.

Zur Schweißung von Aluminium ist es erforderlich, die jeweiligen Aluminiumoxydschichten zu durchbrechen, die sich an der Oberfläche eines Aluminiumbauteils bilden. Hierfür ist eine ausreichend hohe Leerlaufspannung am Ausgang des Schweißtransformators erforderlich, die auch bei den an einer Aluminiumoxydschicht vorhandenen kleinen elektrischen Strömen und den vorhandenen hohen Kontaktwiderständen einen ausreichenden Stromfluss zum Schweißen sicherstellen kann. Noch dazu führt Klebstoff an einer Schweißstelle zu Kontaktschwierigkeiten beim Schweißen. Dabei ist außerdem die Forderung nach immer kürzeren Taktzeiten einer automatisierten Fertigung zu erfüllen.

Ein weiteres Problem ergibt sich, wenn Blechkombinationen aus Blechen mit unterschiedlichen Materialstärken, beispielsweise Dick/Dünn, geschweißt werden sollen. Hierbei ist zu beachten, dass eine Schweißzange zum Schweißen immer in der Richtung an die Blechkombination gehalten wird, dass an dem dickeren Blech die sich stärker erwärmende Elektrode angesetzt wird. Die sich stärker erwärmende Elektrode entspricht dem Pluspol. Somit ist die Positionierung der Schweißzange an Bauteilen für nacheinander auszuführende Schweißverbindungen häufig zeitlich aufwändig.

Zur Einhaltung der geforderten Taktzeiten werden daher oft zwei Roboter eingesetzt, die jeweils eine Schweißzange führen. Dies erhöht den Platzbedarf und die Bereitstell- und Betriebskosten der Widerstandsschweißvorrichtung.

Außerdem kann es beim Schweißen von Aluminium schweißstromrichtungsabhängig zu unerwünschtem Abbrand an den Schweißelektroden bzw. Materialwanderung kommen. Gründe dafür sind verschiedene Legierungen für die geschweißten Bleche und/oder verschiedene Blechdickenkombinationen und/oder der Peltiereffekt.

Daher ist es Aufgabe der vorliegenden Erfindung, einen eine Widerstandsschweißvorrichtung und ein Widerstandsschweißverfahren zum Widerstandsschweißen mindestens eines Bauteils bereitzustellen, mit welchen die zuvor genannten Probleme gelöst werden können. Insbesondere sollen eine Widerstandsschweißvorrichtung und ein Widerstandsschweißverfahren zum Widerstandsschweißen mindestens eines Bauteils bereitgestellt werden, bei welchen bei einem Schweißvorgang, bei dem kleine elektrische Ströme und hohe Kontaktwiderstände vorhanden sind, bei geringem Bauraum und hoher Effizienz für den Schweißtransformator ein ausreichender Stromfluss zum Schweißen sichergestellt wird und Taktzeiten für ein Schweißen bei einer automatisierten Fertigung bei hoher Qualität und geringen Kosten der Fertigung klein gehalten werden können.

Diese Aufgabe wird durch einen eine Widerstandsschweißvorrichtung zum Widerstandsschweißen von mindestens einem Bauteil nach Anspruch 1 gelöst. Die Widerstandsschweißvorrichtung hat einen Schweißtransformator aufweisend eine Primärwicklung zum Anschluss an eine Energieversorgung, eine erste Sekundärwicklung, die mit der Primärwicklung induktiv gekoppelt ist, zum Anschluss an eine erste Schweißelektrode eines Schweißwerkzeugs, einer zweiten Sekundärwicklung und einer dritten Sekundärwicklung, die jeweils mit der Primärwicklung induktiv gekoppelt sind und mit der ersten Sekundärwicklung verbunden sind und zum Anschluss an eine zweite Schweißelektrode des Schweißwerkzeugs vorgesehen sind, bei dem zum Schweißen das mindestens eine Bauteil mit den Schweißelektroden zu kontaktieren ist, einen ersten Gleichrichtzweig zum Gleichrichten eines zwischen der ersten Sekundärwicklung und der ersten Schweißelektrode fließenden elektrischen Stroms, einen zweiten Gleichrichtzweig zum Gleichrichten eines zwischen der zweiten Sekundärwicklung und der zweiten Schweißelektrode fließenden elektrischen Stroms, und ein strombegrenzenden Element, das mit der dritten Sekundärwicklung verschaltet ist, um einen elektrischen Strom durch die dritte Sekundärwicklung auf einen vorbestimmten maximalen Wert zu begrenzen, wie in Anspruch 1 beschrieben.

Die vorhandene zusätzliche Hilfswicklung bzw. Induktivität, die als Luftspule ausgeführt sein kann, ist insbesondere bei einem Schweißvorgang vorteilhaft, bei dem kleine elektrische Ströme und hohe Kontaktwiderstände vorhanden sind. Derartige Bedingungen existieren insbesondere beim Schweißen, insbesondere Widerstandsschweißen, mindestens eines Bauteils, an dessen Oberfläche Aluminiumoxyd und/oder Klebstoff vorhanden ist. Trotz der kleinen elektrischen Ströme und hohen Kontaktwiderstände und/oder Kontaktschwierigkeiten bei einem derartigen Bauteil kann der beschriebene Schweißtransformator einen ausreichenden Stromfluss durch mindestens eine Schweißelektrode sicherstellen.

Der Schweißtransformator ist aufgrund seiner Ausgestaltung in Kombination mit dem Gleichrichter in der Lage sehr schnell zu kommutieren. Dadurch steht auf der Sekundärseite des Schweißtransformators eine höhere Leistung als bei herkömmlichen Schweißtransformatoren zur Verfügung, die mit einem Diodengleichrichter kombiniert sind.

Die Ausgestaltung des beanspruchten Schweißtransformators ermöglicht, dass eine geringere Netzleistung als bei einem herkömmlichen Schweißtransformator bereitzustellen ist, der mit einem Diodengleichrichter kombiniert ist. Dabei umfasst die geringere Netzleistung die Wirkleistung, die Blindleistung und den Phasenstrom. Daraus folgt auch eine CO2-Ersparnis beim Betrieb des Schweißtransformators.

Noch dazu sind für den beanspruchten Schweißtransformator nur noch ein kleinerer Umrichter und kleiner dimensionierte Einspeisekomponenten, wie Hauptschalter usw., erforderlich. Dadurch ergeben sich Kostenvorteile in der Herstellung und im Betrieb des Schweißtransformators.

Darüber hinaus sinkt der Kühlbedarf für den Schweißtransformator im Betrieb. Auch dadurch ergeben sich Kostenvorteile in der Herstellung und im Betrieb des Schweißtransformators.

Insgesamt trägt der Schweißtransformator vorteilhaft mit dazu bei, dass Taktzeiten für ein Schweißen bei einer automatisierten Fertigung klein gehalten werden können und hohe Qualität und geringe Kosten der Fertigung gewährleistet werden kann. Dabei kann der Schweißtransformator ein schnelleres Stromabschalten nach dem Schweißvorgang ermöglichen als bei herkömmlichen Schweißvorrichtungen. Dadurch kann die Zeit zum Herstellen einer Schweißverbindung deutlich gesenkt werden. Als Folge davon sind die vorgegebenen Taktzeiten auch einhaltbar, falls nur ein einziger Schweißroboter zum Einsatz kommt. Dadurch ergeben sich große Vorteile in Bezug auf den Platzbedarf und die Bereitstell- und Betriebskosten der Schweißvorrichtung.

Der in den Ansprüchen beanspruchte Schweißtransformator hat geringere Verluste und einen kleineren Bauraum jedoch eine höhere Leistung als die zuvor beschriebene Thyristor-Lösung. Außerdem hat der in den Ansprüchen beanspruchte Schweißtransformator eine ähnliche Leistungsfähigkeit und ähnlichen Bauraum jedoch geringere Verluste als ein MF-DC-Transformator mit einem Diodengleichrichter nach dem Stand der Technik. Diese Eigenschaften sind im Hinblick auf den schonenden Einsatz von Ressourcen ein großer Pluspunkt. Zudem verursachen die verbesserten Betriebseigenschaften für den Betreiber der Widerstandsschweißvorrichtung geringere Kosten.

Somit bietet der in den Ansprüchen beanspruchte Schweißtransformator, der zum Widerstandsschweißen geeignet ist, aufgrund der oft vorherrschenden beengten Platzverhältnisse und aus Kostengründen eine sehr vorteilhafte Lösung.

Vorteilhafte weitere Ausgestaltungen des Schweißtransformators sind in den abhängigen Ansprüchen angegeben.

Möglicherweise hat der erste und zweite Gleichrichtzweig jeweils eine Reihenschaltung aus zwei Transistoren, die zwischen das Schweißwerkzeug und einen Ausgang des Schweißtransformators geschaltet sind, wobei die Polarität des einen Transistors der Reihenschaltung gegenüber der Polarität des anderen Transistors der Reihenschaltung gedreht ist.

Die zwei Transistoren können Metall-Oxid-Halbleiter-Feldeffekttransistoren sind, wobei der Transistor mit der gedrehten Polarität mit dem Schweißwerkzeug verbunden ist.

Zusätzlich kann ein dritter Gleichrichtzweig vorhanden sein zum Gleichrichten eines zwischen der zweiten Sekundärwicklung und der ersten Schweißelektrode fließenden elektrischen Stroms. In einer Ausgestaltung hat der dritte Gleichrichtzweig eine Reihenschaltung aus zwei Transistoren, die zwischen das Schweißwerkzeug und einen Ausgang des Schweißtransformators geschaltet sind, wobei die Polarität des einen Transistors der Reihenschaltung gegenüber der Polarität des anderen Transistors der Reihenschaltung gedreht ist.

Bei einer Ausgestaltung ist das strombegrenzende Element eine steuerbare Induktivität und/oder ein Widerstand, die zwischen die dritte Sekundärwicklung und die erste Schweißelektrode geschaltet sind/ist.

Bei einer anderen Ausgestaltung ist das strombegrenzende Element ein Halbleiterschalter, der zwischen die dritte Sekundärwicklung und die erste Schweißelektrode geschaltet ist. Der Halbleiterschalter kann ein bipolarer Transistor oder ein Metalloxyd-Feldeffekttransistor sein. Alternativ kann der Halbleiterschalter ein Thyristor sein, zu dem optional ein antiparalleler Thyristor geschaltet ist.

Bei noch einer anderen Ausgestaltung ist das strombegrenzende Element eine Reihenschaltung aus einer ersten Tunneldiode, zu der eine zweite Tunneldiode antiparallel geschaltet ist, und einem Halbleiterschalter ist, wobei die Reihenschaltung zwischen die dritte Sekundärwicklung und die erste Schweißelektrode geschaltet ist, und wobei der Halbleiterschalter ein bipolarer Transistor oder ein Metalloxyd-Feldeffekttransistor oder ein Thyristor ist.

Die Schweißvorrichtung kann zudem ein Schweißwerkzeug aufweisen, das als Schweißzange mit zwei Schweißelektroden ausgestaltet ist, zwischen welchen das mindestens eine Bauteil beim Schweißen angeordnet ist.

Die Schweißvorrichtung kann zudem eine Steuereinrichtung zum Schalten der Reihenschaltung aus zwei Transistoren in dem Gleichrichtzweig während einer umrichtergesteuerten Schweißzeit in einer ersten Betriebsart und zum Schalten der Reihenschaltung aus zwei Transistoren in dem Gleichrichtzweig, am Ende der umrichtergesteuerten Schweißzeit für eine vorbestimmte Zeitdauer in einer zweiten Betriebsart die sich von der ersten Betriebsart unterscheidet. Hierbei realisiert die erste Betriebsart an dem Schweißtransformator eine polaritätsumschaltbare Schweißspannung und einen polaritätsumschaltbaren Schweißstrom, wobei die zweite Betriebsart ein Stromabklingen des Schweißstroms beschleunigt, der in der ersten Betriebsart erzeugt wurde.

Die zuvor beschriebene Schweißvorrichtung kann Teil einer Anlage sein, die zur Behandlung von Gegenständen vorgesehen ist. Hierbei kann die Widerstandsschweißvorrichtung zum Widerstandsschweißen von mindestens einem Bauteil für mindestens einen der Gegenstände vorgesehen sein. Zusätzlich oder alternativ kann die Anlage zur Fertigung von Fahrzeugrohkarossen oder Heizkörpern oder Ketten als Gegenstände ausgestaltet sein. Zusätzlich oder alternativ kann die Anlage zur Fertigung von Gegenständen aus mindestens einem Bauteil aus Aluminium ausgestaltet sein, an dem Klebstoff vorhanden sein kann.

Die Aufgabe wird zudem durch ein Widerstandsschweißverfahren zum Widerstandsschweißen von mindestens einem Bauteil nach Anspruch 15 gelöst. Hierbei findet ein Schweißwerkzeug Verwendung, das mit einer zuvor beschriebenen Widerstandsschweißvorrichtung elektrisch verbunden ist. Hierbei hat das Widerstandsschweißverfahren die Schritte, Kontaktieren des mindestens einen Bauteils mit der ersten und zweiten Schweißelektrode des Schweißwerkzeugs, Gleichrichten, mit dem ersten Gleichrichtzweig, eines zwischen der ersten Sekundärwicklung und der ersten Schweißelektrode fließenden elektrischen Stroms, Gleichrichten, mit dem zweiten Gleichrichtzweig, eines zwischen der zweiten Sekundärwicklung und der zweiten Schweißelektrode fließenden elektrischen Stroms, und Begrenzen, mit dem strombegrenzenden Element, das mit der dritten Sekundärwicklung verschaltet ist, eines elektrischen Stroms durch die dritte Sekundärwicklung auf einen vorbestimmten maximalen Wert, wie in Anspruch 15 beschrieben.

Das Schweißverfahren erzielt die gleichen Vorteile, wie sie zuvor in Bezug auf den Schweißtransformator und die Schweißvorrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein Blockschaltbild einer Anlage mit einer Schweißvorrichtung gemäß einem ersten Ausführungsbeispiel;
Fig. 2 ein Zeitverlaufsdiagramm eines Schweißstroms, der beim Schweißen mit der Schweißvorrichtung gemäß dem ersten Ausführungsbeispiel erzeugt wird und der nach dem Schweißvorgang abklingt, im Vergleich zu einem Verlauf eines Schweißstroms bei einer herkömmlichen Betriebsart der Schweißvorrichtung;
Fig. 3 ein Blockschaltbild einer Schweißvorrichtung gemäß einem zweiten Ausführungsbeispiel; und
Fig. 4 ein Blockschaltbild einer Schweißvorrichtung gemäß einem dritten Ausführungsbeispiel.

In den Figuren sind gleiche oder funktionsgleiche Elemente, sofern nichts anderes angegeben ist, mit denselben Bezugszeichen versehen.

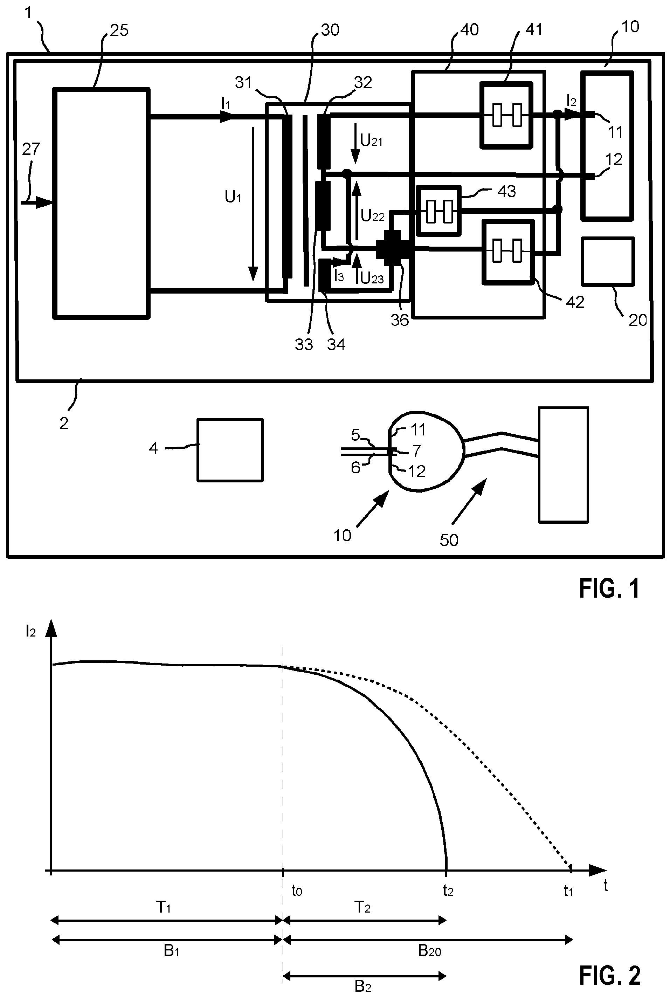

Fig. 1 zeigt schematisch eine Anlage 1 mit einer Schweißvorrichtung 2, die insbesondere eine Widerstandsschweißvorrichtung 2 ist. Die Anlage 1 kann beispielsweise eine Fertigungsanlage für Gegenstände 4, wie Fahrzeuge, Möbel, Heizkörper, usw. sein.

In der Fertigungsanlage 1 können metallische Bauteile 5, 6 durch Schweißen, insbesondere Widerstandsschweißen, derart verbunden werden, dass eine Schweißverbindung 7 hergestellt wird. Hierzu hat die Schweißvorrichtung 2 mindestens ein Schweißwerkzeug 10 in Form einer Schweißzange, eine Steuereinrichtung 20, einen Umrichter 25, einen Schweißtransformator 30, ein strombegrenzendes Element, das als gesteuerte Induktivität 36 ausgeführt ist, eine Gleichrichterschaltung 40 sowie eine Vorrichtung 50 zum Führen eines Schweißwerkzeugs 10. Der Umrichter 25 und somit der Schweißtransformator 30 wird von einem Energieversorgungsnetz 27 mit elektrischer Energie versorgt.

Das Schweißwerkzeug 10 hat bei dem Beispiel von Fig. 1 zwei Schweißelektroden 11, 12.

Der Schweißtransformator 30 hat auf seiner Primärseite eine Primärwicklung 31. Der Schweißtransformator 30 hat auf seiner Sekundärseite eine erste Sekundärwicklung 32, eine zweite Sekundärwicklung 33 und eine Hilfswicklung 34, die eine dritte Sekundärwicklung ist. Der Schweißtransformator 30 hat vier Ausgänge, zwischen welchen die Wicklungen 31 bis 34 angeordnet sind. Der Transformator 30 mit der nachgeschalteten Gleichrichterschaltung 40 ist ein Mittelfrequenz-Gleichspannungstransformator, der auch als MF-DC-Transformator bezeichnet werden kann. Der Schweißtransformator 30 hat zudem die Hilfswicklung 34 als dritte Sekundärwicklung, wie bereits erwähnt.

Die Gleichrichterschaltung 40 hat einen ersten Gleichrichtzweig 41, einen zweiten Gleichrichtzweig 42 und einen dritten Gleichrichtzweig 43. Der erste Gleichrichtzweig 41 ist als Reihenschaltung aus einem ersten Transistor und einem zweiten Transistor ausgestaltet. Der zweite Gleichrichtzweig 42 ist als Reihenschaltung aus einem ersten Transistor und einem zweiten Transistor ausgestaltet. Die Transistoren der Zweige 41, 42 sind insbesondere Metall-Oxid-Halbleiter-Feldeffekttransistoren, die auch MOSFET abgekürzt werden können. Der dritte Gleichrichtzweig 43 hat beispielsweise mindestens einen Transistor. Insbesondere hat der dritte Gleichrichtzweig 43 eine Reihenschaltung aus Transistoren, insbesondere aus MOSFETs, die angesteuert durch die Steuereinrichtung 20 in Synchronschaltung betreibbar ist.

Die Schweißvorrichtung 2 kann unter Steuerung der Steuereinrichtung 20 mit dem Schweißwerkzeug 10 eine Schweißverbindung 7 herstellen. Hierfür ist mindestens eines der Bauteile 5, 6 zwischen den beiden Schweißelektroden 11, 12 angeordnet, wie zuvor beschrieben und wie beispielsweise in Fig. 1 gezeigt. Hierbei ist es insbesondere möglich, dass die Bauteile 5, 6 spezielle Kombinationen, insbesondere Blechkombinationen, aufweisen. Eine solche spezielle Kombination ist insbesondere eine Kombination aus Blechen mit unterschiedlichen Materialstärken, eine Kombination von speziellen Formen der Bauteile, eine Kombination mit einem Aluminiumbauteil und/oder Aluminiumblech, usw. Zur Schweißung von Aluminium wird die Widerstandsschweißvorrichtung 2 mit Hilfe der Steuereinrichtung 20 derart betrieben, dass die jeweilige(n) Aluminiumoxydschicht an der relevanten Oberfläche des Aluminiumbauteils durchbrochen wird.

Zudem kann mit der Schweißvorrichtung 2 unter Steuerung der Steuereinrichtung 20 auch eine Schweißverbindung 7 hergestellt werden, wenn Klebstoff an der Stelle vorhanden ist, an der die Schweißverbindung 7 hergestellt werden soll. Dies wird nachfolgend noch genauer beschrieben.

Es ist möglich, dass beispielsweise zwei Kanten eines einzigen Bauteils 5 durch Widerstandsschweißen mit einer oder mehreren Schweißverbindungen 7 miteinander verbunden werden. Unabhängig davon, wie viele Bauteile 5, 6 mit einer Schweißverbindung 7 miteinander verbunden werden, kann/können die Schweißverbindung(en) 7 eine Punktschweißung oder eine Schweißnaht oder Kombinationen daraus sein.

Im normalen Schweißbetrieb wandelt der Schweißtransformator 30 eine Primärspannung U₁ in die erste bis dritte Sekundärspannung U₂₁, U₂₂, U₂₃. Hierbei ist die Summe der Sekundärspannungen U₂₁, U₂₂, U₂₃ kleiner als der Wert der Primärspannung U₁. Zudem wandelt der Schweißtransformator 30 einen Primärstrom I₁ auf der Primärseite des Schweißtransformators 30 in den Sekundärstrom I₂ auf der Sekundärseite des Schweißtransformators 30 um. Der Sekundärstrom I₂, der auch als Schweißstrom bezeichnet werden kann, hat einen höheren Wert als der Primärstrom I₁.

Somit liegt zum Schweißen bei der Schweißvorrichtung 2 an der Sekundärseite des Schweißtransformators 30 eine erste Sekundärspannung U₂₁ an der ersten Sekundärwicklung 32 des Schweißtransformators 30 an. Die Sekundärspannung U₂₁ liegt zwischen einem ersten und zweiten Ausgang des Schweißtransformators 30 an. Außerdem liegt die zweite Sekundärspannung U₂₂ zwischen dem zweiten und dritten Ausgang des Schweißtransformators 30 an. Zudem liegt die dritte Sekundärspannung U₂₃ zwischen dem zweiten und vierten Ausgang des Schweißtransformators 30 an und hat einen elektrischen Strom I₃ durch die Wicklung 34 zur Folge. Die erste Sekundärspannung U₂₁, die zweite Sekundärspannung U₂₂ und die dritte Sekundärspannung U₂₂ bilden eine Schweißspannung U₂₁, U₂₂, U₂₃, welche den Schweißstrom I₂ zur Folge hat.

An der ersten Sekundärwicklung 32 des Schweißtransformators 30 ist der erste Gleichrichtzweig 41 angeschlossen. Mit anderen Worten, der erste Gleichrichtzweig 41 ist an dem ersten Ausgang des Schweißtransformators 30 angeschlossen. Der erste Gleichrichtzweig 41 ist zwischen den Schweißtransformator 30 und das Schweißwerkzeug 10 geschaltet. Genauer gesagt, ist der erste Gleichrichtzweig 41 zwischen den Schweißtransformator 30 und die erste Schweißelektrode 11 geschaltet.

Die zweite Schweißelektrode 12 ist direkt mit dem Abgriff zwischen der ersten und zweiten Hilfswicklung 32, 33 verbunden. Der Abgriff zwischen der ersten und zweiten Hilfswicklung 32, 33 ist der zweite Ausgang des Schweißtransformators 30.

Der zweite Gleichrichtzweig 42 ist zwischen den Schweißtransformator 30 und die erste Schweißelektrode 11 geschaltet. Dabei ist der dritte Ausgang des Schweißtransformators 30 mit einer Seite der gesteuerten Induktivität 36 verbunden, die an einer anderen Seite mit dem zweiten Gleichrichtzweig 42 verbunden ist. Mit anderen Worten, der zweite Gleichrichtzweig 42 ist an dem dritten Ausgang des Schweißtransformators 30 angeschlossen. Der zweite Gleichrichtzweig 42 ist zwischen den Schweißtransformator 30 und das Schweißwerkzeug 10 geschaltet. Genauer gesagt, ist der zweite Gleichrichtzweig 42 zwischen den Schweißtransformator 30 und die erste Schweißelektrode 11 geschaltet.

Die Hilfswicklung 34 ist an ihrem einen Ende an den zweiten Ausgang des Schweißtransformators 30 bzw. an den Abgriff zwischen der ersten und zweiten Sekundärwicklung 32, 33 geschaltet. Das andere Ende der Hilfswicklung 34 ist mit der gesteuerten Induktivität 36 verbunden. Zudem ist die gesteuerte Induktivität 36 mit dem dritten Gleichrichtzweig 43 verbunden. Mit anderen Worten, der dritte Gleichrichtzweig 43 ist an den dritten Ausgang des Schweißtransformators 30 angeschlossen. Der dritte Gleichrichtzweig 43 ist zwischen den Schweißtransformator 30 und das Schweißwerkzeug 10 geschaltet. Genauer gesagt, ist der dritte Gleichrichtzweig 43 zwischen den Schweißtransformator 30 und die erste Schweißelektrode 11 geschaltet.

Im normalen Schweißbetrieb, wie zuvor beschrieben, steuert die Steuereinrichtung 20 den Transformator 30 derart, dass der Transformator 30 mit einem einseitigen Betrieb der Hilfswicklung 34 nicht in Sättigung geht. Die Steuereinrichtung 20 steuert dafür die steuerbare Induktivität 36 derart, dass bei einem vorbestimmten Strom in der Primärwicklung 31 des Transformators 30 der elektrische Strom I₃ in der Hilfswicklung 34 begrenzt wird. Der Strom I₃ fließt durch den Gleichrichtzweig 43 zu der ersten Schweißelektrode 11. Der dritte Gleichrichtzweig 43 hat eine entsprechende Reihenschaltung aus Transistoren, beispielsweise Feldeffekttransistoren, insbesondere MOSFETs, um den Strom von der Hilfswicklung 34 gleichzurichten. Die Reihenschaltung aus Transistoren, beispielsweise Feldeffekttransistoren, insbesondere MOSFETs, kann in Synchronschaltung betrieben werden, wie nachfolgend für den ersten und zweiten Gleichrichtzweig 41, 42 beschrieben.

Somit realisiert die steuerbare Induktivität 36 bei Steuerung durch die Steuereinrichtung 20 eine Strombegrenzung der Hilfswicklung 34 und ihrer Komponenten. Derartige Komponenten sind bei der Vorrichtung 2 von Fig. 1 die steuerbare Induktivität 36 und der dritte Gleichrichtzweig 43. Die Strombegrenzung bewirkt, dass die Hilfswicklung 34 und ihre Komponenten nicht durch einen zu hohen Strom I₃ geschädigt werden. Alternativ ist der dritte Gleichrichtzweig 43 als Diode ausgeführt.

Durch die Hilfswicklung 34 auf der Sekundärseite des Transformators 30 kann die Ausgangsspannung des Transformators 30 im Leerlauf und bei einem kleinen Schweißstrom I₂ erhöht werden. Dadurch wird bewirkt, dass bei Kontaktproblemen an der Schweißstelle, beispielsweise aufgrund von Klebstoff an der Schweißstelle, der Schweißstrom I₂ zu Beginn der Schweißzeit besser getrieben werden kann.

Die zuvor beschriebene Ansteuerung durch die Steuereinrichtung 20 entspricht einer Transformatorvariante mit Gleichrichtbetrieb bzw. Synchronschaltung der Transistoren in den Gleichrichtzweigen 41, 42, 43.

Alternativ dazu kann die Steuereinrichtung 20 zwei Betriebsarten B₁, B₂ bzw. B₁, B₂₀ für eine Steuerung der Gleichrichtzweige 41, 42 unterscheiden. Der Effekt der Betriebsarten B₁, B₂ sowie der Betriebsarten B₁, B₂₀ auf den Schweißstrom I₂ ist in Fig. 2 veranschaulicht. Zusätzlich dazu steuert die Steuereinrichtung 20 den dritten Gleichrichtzweig 43, wie zuvor beschrieben.

Für eine erste Betriebsart B₁, bei welcher das Schweißen bzw. das Herstellen einer Schweißverbindung 7 ausgeführt wird, wird aktiv Energie von der Primärseite des Schweißtransformators 30 auf die Sekundärseite des Schweißtransformators 30 übertragen, um den Schweißgleichstrom, mit anderen Worten den Schweißstrom I₂, zu erzeugen. Für eine solche Energieübertragung von der Primärseite auf die Sekundärseite des Schweißtransformators 30 ist die Steuereinrichtung 20 ausgestaltet, die Polarität der Transistoren der Gleichrichtzweige 41, 42 wie gewünscht zu schalten. Hierfür ist die Steuereinrichtung 20 ausgestaltet, jeweils in Abhängigkeit der Ausgangsspannung des Schweißtransformators 30 und der Polaritätsvorwahl einen Transistor der Transistoren der Gleichrichtzweige 41, 42 einzuschalten. Der in Reihe geschaltete Transistor der Gleichrichtzweige 41, 42 wird im Synchronbetrieb bei Strom dann negativ leitend eingeschaltet.

Beispielsweise schaltet die Steuereinrichtung 20 den ersten Transistor des Gleichrichtzweigs 41 jeweils in Abhängigkeit der Ausgangsspannung und der Polaritätsvorwahl ein. Der in Reihe geschaltete zweite Transistor 42 wird im Synchronbetrieb bei Erzeugung des Schweißstroms I₂ dann negativ leitend eingeschaltet.

Dadurch sind pro Gleichrichterzweig 41, 42 der Gleichrichterschaltung 40 dann die beiden Transistoren in Reihe eingeschaltet.

Auf diese Weise kann an dem Schweißtransformator 30 eine polaritätsumschaltbare Schweißspannung U₂₁, U₂₂ und ein polaritätsumschaltbarer Schweißstrom I₂ realisiert werden.

Dadurch wird eine wechselbare Polarität des Schweißtransformators 30 und Stromrichtung des Schweißstroms I₂ realisiert. In Folge dessen sind die zuvor beschriebenen Magnetisierungseffekte vermeidbar. Außerdem kann bei einem Bauteil 5, 6 mit einer Aluminiumschicht die Aluminiumoxydschicht prozesssicher aufgebrochen werden und/oder das Problem aufgrund von Vorhandensein von Klebstoff an der Schweißstelle wird behoben.

Nach einem Zeitpunkt t₀, welcher dem Ende der Schweißzeit T₁ entspricht, in welcher ein Schweißvorgang ausgeführt wird, wechselt die Steuereinrichtung 20 in eine zweite Betriebsart B₂. In der zweiten Betriebsart B₂ führt die Steuereinrichtung 20 einen aktiven Wechsel der Gleichrichtbetriebsart sekundärseitig aus, wie nachfolgend beschrieben.

Für die zweite Betriebsart B₂, steuert die Steuereinrichtung 20 die Transistoren der Gleichrichtzweige 41, 42, um ein schnelles Stromabklingen des Schweißstroms I₂ zu erreichen, wie mit Hilfe von Fig. 2 veranschaulicht.

In Fig. 2 ist mit einer gestrichelten Kurve über der Zeit t der Verlauf des Schweißstroms I₂ veranschaulicht, der sich bei einer Standardgleichrichtung mit nicht dargestellten Dioden einstellt. Bei einer derartigen Standardgleichrichtung wird die Energie aus dem Sekundärkreis des Schweißtransformators 30 nach dem Ende der Schweißzeit T₁ über ohmsche Verluste der Dioden abgebaut. Hierbei ist der Schweißstrom I₂ zu einem Zeitpunkt t₁ abgeklungen.

Im Gegensatz dazu wird bei dem vorliegenden Ausführungsbeispiel in der zweiten Betriebsart B₂ für die Steuerung der Transistoren der Gleichrichtzweige 41, 42 am Ende der normalen umrichtergesteuerten Schweißzeit T₁ der Stromabfall bzw. das Stromabklingen des Schweißstroms I₂ beschleunigt. Hierfür werden in den Gleichrichtzweigen 41, 42 die relevanten Transistoren, deren pn-Übergänge jeweils zwei gegeneinander geschalteten Dioden entsprechen, aus dem Synchronbetrieb herausgenommen und der abfallende Schweißstrom I₂ stattdessen über parallele Dioden der in Reihe geschalteten Transistoren der Gleichrichtzweige 41, 42 geführt.

Als Folge davon ist der Schweißstrom I₂ bereits bei einem Zeitpunkt t₂ bzw. nach einer Zeitdauer T₂ abgeklungen und nicht wie bisher erst nach der Zeit t₁, wie in Fig. 2 veranschaulicht.

Somit schaltet die Steuereinrichtung 20 die jeweilige Reihenschaltung aus zwei Transistoren der Gleichrichtzweige 41, 42 am Ende der umrichtergesteuerten Schweißzeit T₁ für eine vorbestimmte Zeitdauer T₂ = t₂ - t₀ in der zweiten Betriebsart B₂. Die erste und zweite Betriebsart B₁, B₂ unterscheiden sich folglich voneinander.

Infolgedessen wird in der zweiten Betriebsart B₂ durch erzwungenen Wechsel der Gleichrichterelemente 41, 42 zusätzlich Energie durch den sekundärseitigen Stromwechsel in den Gleichrichterzweigen erzeugt, woraus jeweils eine Ummagnetisierung des Schweißtransformators 30 auf der Sekundärseite des Schweißtransformators 30 folgt. Dadurch entstehen Magnetisierungsverluste auf der Sekundärseite des Schweißtransformators 30, welche die Energie des Sekundärkreises mit abbauen und so zu einem schnelleren Abklingen des Schweißstroms I₂ führen.

Die Steuereinrichtung 20 ist also für einen sekundärseitigen aktiven Wechsel der Gleichrichtbetriebsart ausgestaltet, welcher Wechsel Magnetisierungsverluste auf der Sekundärseite des Schweißtransformators 30 zur Folge hat.

Dabei ist es optional möglich, jedoch wegen der zuvor beschriebenen Strombegrenzung des Stroms I₃ nicht unbedingt erforderlich, dass die Steuereinrichtung 20 in der zweiten Betriebsart auch die Transistoren des Gleichrichtzweigs 43 schaltet wie für die Transistoren der Gleichrichtzweige 41, 42 zuvor beschrieben.

Die zuvor beschriebene Ausgestaltung des Transformators 30 in Kombination mit den Gleichrichtzweigen 41, 42 mit den Transistoren und deren Ansteuerung durch die Steuereinrichtung 20 hat außerdem den Effekt, dass der Schweißtransformator 30 bei gleicher Ausgangsleistung ein geringeres Übersetzungsverhältnis als ein herkömmlicher Schweißtransformator haben kann, der mit Dioden in den Gleichrichtzweigen 41, 42 betrieben wird. Mit anderen Worten, wenn der zuvor beschriebene Schweißtransformator 30 dasselbe Übersetzungsverhältnis hat wie ein herkömmlicher Schweißtransformator gleicher Ausgangsleistung, benötigt der zuvor beschriebene Schweißtransformator 30 weniger Eingangsleistung als der herkömmliche Schweißtransformator 30. Dadurch verbraucht der Schweißtransformator 30 mit der nachgeschalteten Gleichrichterschaltung 40 weniger vom Umrichter 25 gelieferte Leistung als ein herkömmlicher Schweißtransformator gleicher Ausgangsleistung. Grund dafür ist, dass die Dioden in den Gleichrichtzweigen 41, 42 eines herkömmlichen Schweißtransformators auch in den Zeiten zwischen Schweißvorgängen immer mitlaufen. Dadurch haben die Dioden auch im Freilauf eine Verlustleistung, die letztlich hohe interne Verluste des herkömmlichen Schweißtransformators zur Folge haben.

Beispielsweise kann ein Schweißtransformator 30 mit der zuvor beschriebenen Ausgestaltung mit der Hilfswicklung 34, der gesteuerten Induktivität 36 und dazu kombinierten Gleichrichterschaltung 40 ein Übersetzungsverhältnis von etwa 60:1 haben. Ein solcher Schweißtransformator 30 in Synchronschaltung hat in etwa denselben Nennstrom von 6,5kA wie ein herkömmlicher Schweißtransformator gemäß der Industrienorm DIN EN ISO22829, der ein Übersetzungsverhältnis von 55:1 hat. Ein solcher Schweißtransformator 30 mit einem Übersetzungsverhältnis von 60:1 kann dennoch einen Schweißstrom I₂ = 25 kA bei einem Sekundärwiderstand von 200 µOhm treiben, wie von der Industrienorm DIN EN ISO22829 für den Schweißtransformator mit dem Übersetzungsverhältnis von 55:1 gefordert.

Im Vergleich zum Stand der Technik hat somit der Schweißtransformator 30 von Fig. 1 eine kleinere Baugröße, geringeres Gewicht und einen Kostenvorteil in Bezug auf den Umrichter 25 und den Hauptschalter zum Abschalten des Umrichters 25 bzw. Einspeisekomponenten der Schweißvorrichtung 2.

Die Schweißvorrichtung 2 kann besonders vorteilhaft bei Blechkombinationen zum Einsatz kommen, bei welchen es bei einer Schweißzange zum unerwünschtem Abbrand der Schweißelektroden 11, 12 oder Materialwanderung kommt und/oder beim Schweißen von Aluminium und/oder wo Klebstoff an der vorgesehenen Schweißposition vorhanden ist und/oder schnelle Taktzeiten beim Einsatz der Vorrichtung 2 gefordert werden. Außerdem kann ein Anlegieren von Elektrodenkappen der Schweißelektroden 11, 12 vermieden werden. Zusätzlich oder alternativ kann die Schweißvorrichtung 2 besonders vorteilhaft beim Schweißen von Kettengliedern und beim Schweißen von Heizkörpern verwendet werden.

Gemäß einer Modifikation der vorangehenden Steuerung der Steuereinrichtung 20 beim Schweißen kann die Steuereinrichtung 20 folgendermaßen vorgehen. Hierbei schaltet die Steuereinrichtung 20 den Schweißstrom I₂ in der zweiten Betriebsart B₂ kontrolliert über die Transistoren der Gleichrichtzweige 41, 42 in die beiden Sekundärzweige des Transformators 30 abwechselnd hin und her, um ein noch schnelleres Stromabklingen des Schweißstroms I₂ zu erreichen bzw. einen schnelleren Stromabfall des Schweißstroms I₂ zu erzeugen.

Hierbei kann in der zweiten Betriebsart B₂ der Wechsel auf Grund der höheren Primärspannung des Transformators 30 schneller erfolgen. Damit können mehr Magnetisierungsverluste erzeugt werden. Dadurch erfolgt das Abklingen des Schweißstroms I₂ hier bereits bei einem noch früheren Zeitpunkt, der zwischen dem Zeitpunkt t₀ und dem Zeitpunkt t₂ liegt. Somit klingt der Schweißstrom I₂ noch schneller ab als bei dem ersten Ausführungsbeispiel.

Auch auf diese Weise können die zuvor in Bezug auf das erste Ausführungsbeispiel genannten Vorteile erzielt werden.

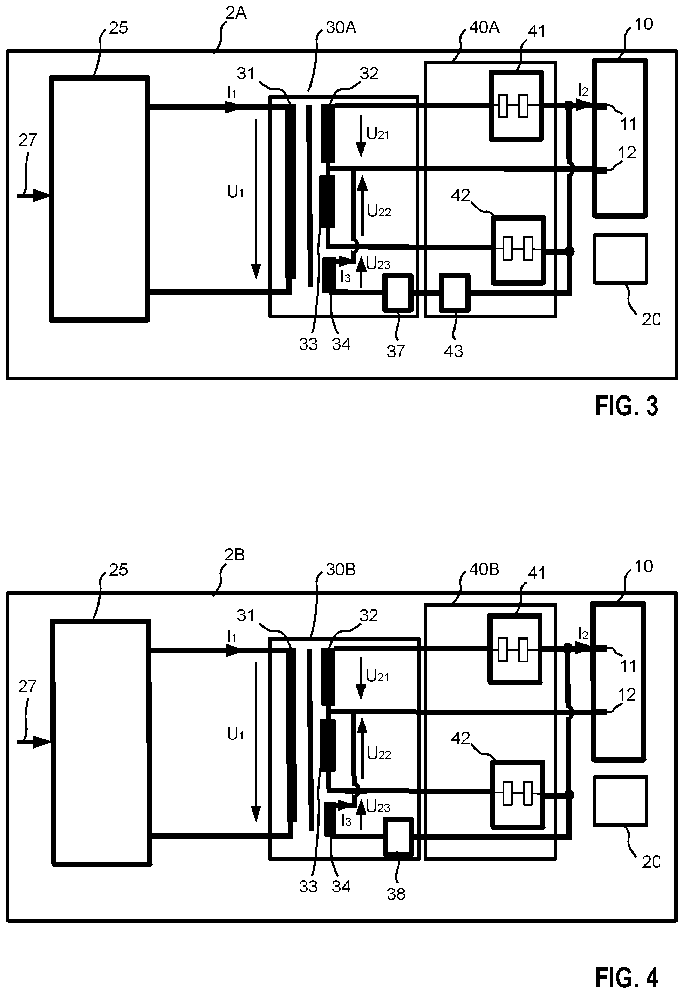

Fig. 3 zeigt eine Schweißvorrichtung 2A mit einem Schweißtransformator 30A und eine Gleichrichterschaltung 40A gemäß einem zweiten Ausführungsbeispiel.

Im Unterschied zu dem Schweißtransformator 30 gemäß dem vorangehenden Ausführungsbeispiel ist der Schweißtransformator 30A gemäß dem vorliegenden Ausführungsbeispiel für eine Transformatorvariante mit Polumschaltung ausgestaltet.

Der Schweißtransformator 30A hat als strombegrenzendes Element 37 einen elektrischen Widerstand. Der Widerstand ist optional zumindest teilweise in der oder durch die Hilfswicklung 34 ausgebildet.

Der dritte Gleichrichtzweig 43 hat eine Reihenschaltung aus Transistoren, insbesondere aus MOSFETs, die mit polaritätsabhängiger Steuerung der Steuereinrichtung 20 gesteuert werden. Zudem ist der Gleichrichterzweig 43 in Synchronschaltung betreibbar, wie in Bezug auf das vorangehende Ausführungsbeispiel beschrieben.

Gemäß einer Modifikation des zweiten Ausführungsbeispiels ist das strombegrenzende Element 37 des Schweißtransformators 30A ein Halbleiterschalter, der ab einem vorbestimmten Wert des Stroms I₃ die Hilfswicklung 34 ausschaltet. Der Halbleiterschalter kann eine Diode sein. Die Diode ist mit dem Gleichrichtzweig 43 kombiniert, der aus einer Reihenschaltung aus Transistoren gebildet ist, die wie zuvor beschrieben insbesondere MOSFETs sind, die mit polaritätsabhängiger Steuerung der Steuereinrichtung 20 gesteuert werden. Zudem ist der Gleichrichterzweig 43 in Synchronschaltung betreibbar.

Die in Fig. 3 gezeigte Schaltung der Schweißvorrichtung 2A ist in allen Varianten für das strombegrenzende Element 37 von der Steuereinrichtung 20 gemäß einer Art und Weise schaltbar, wie in Bezug auf eines der vorangehenden Ausführungsbeispiele beschrieben.

Die Einsparung von Energie im Verhältnis zu einem herkömmlichen Schweißtransformator, der mit Dioden in den Gleichrichtzweigen 41, 42 betrieben wird, ist bei der Transformatorvariante mit den beiden MOSFETs zur Gleichrichtung (Synchronschaltung) in einem Gleichrichtzweig 41, 42 höher als bei der Transformatorvariante mit Polumschaltung.

Die Schweißvorrichtung 2A kann anstelle der Schweißvorrichtung 2 gemäß dem vorangehenden Ausführungsbeispiel bei der Anlage 1 gemäß dem vorangehenden Ausführungsbeispiel eingesetzt werden.

Fig. 4 zeigt eine Schweißvorrichtung 2B mit einem Schweißtransformator 30B und eine Gleichrichterschaltung 40B gemäß einem dritten Ausführungsbeispiel.

Im Unterschied zu den Schweißtransformatoren 30, 30A gemäß den vorangehenden Ausführungsbeispielen ist der Schweißtransformator 30B gemäß dem vorliegenden Ausführungsbeispiel für eine Transformatorvariante mit Polumschaltung ausgestaltet.

Der Schweißtransformator 30B hat als strombegrenzendes Element 38 zwei antiparallel geschaltete Tunneldioden, zu denen ein Halbleiterschalter in Reihe geschaltet ist. Der Halbleiterschalter ist beispielsweise ein MOSFET oder ein bipolarer Transistor oder ein Thyristor. Die Tunneldiode begrenzt den Strom I₃ in der Hilfswicklung 34 auf den vorbestimmten Stromwert.

In diesem Fall ist in der Gleichrichterschaltung 40 kein zusätzliches elektrisches Bauteil zum Gleichrichten des Stroms I₃ erforderlich.

Die in Fig. 4 gezeigte Schaltung der Schweißvorrichtung 2B ist von der Steuereinrichtung 20 gemäß einer Art und Weise schaltbar, wie in Bezug auf eines der vorangehenden Ausführungsbeispiele beschrieben.

Die Schweißvorrichtung 2B kann anstelle der Schweißvorrichtung 2 gemäß einem der vorangehenden Ausführungsbeispiele bei der Anlage 1 gemäß den vorangehenden Ausführungsbeispielen eingesetzt werden.

Alle zuvor beschriebenen Ausgestaltungen der Anlage 1, der Schweißvorrichtungen 2, 2A, 2B, der Steuereinrichtung 20, des Schweißtransformators 30, 30A, 30B, der Gleichrichterschaltung 40 und des Widerstandsschweißverfahrens können einzeln oder in allen möglichen Kombinationen Verwendung finden. Insbesondere ist es möglich, alle Merkmale und/oder Funktionen der zuvor beschriebenen Ausführungsbeispiele beliebig zu kombinieren. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Transistoren der Gleichrichtzweige 41, 42, 43 sind alternativ Bipolartransistoren, wobei jedoch die Ausführung als Metall-Oxid-Halbleiter-Feldeffekttransistoren (MOS-FET) bevorzugt wird.

Der Schweißtransformator 30, 30A, 30B kann alternativ aus einer Parallelschaltung von zwei Transformatoren aufgebaut sein.

Möglicherweise kann die Steuereinrichtung 20 mehr als ein Schweißwerkzeug 10 zumindest zeitweise und/oder teilweise gleichzeitig mit mindestens einem weiteren Schweißwerkzeug 10 steuern.

## Patentansprüche

1. Widerstandsschweißvorrichtung (2; 2A, 2B) zum Widerstandsschweißen von mindestens einem Bauteil (5, 6), wobei die Widerstandsschweißvorrichtung einen Schweißtransformator (30; 30A; 30B) in Kombination mit einem Gleichrichter (40) aufweist, wobei der Schweißtransformator (30; 30A; 30B) aufweist
eine Primärwicklung (31) zum Anschluss an eine Energieversorgung (27), und vier Ausgänge, zwischen welchen eine erste bis dritte Sekundärwicklung (32, 33, 34) angeordnet sind, wobei die erste Sekundärwicklung (32) mit der Primärwicklung (31) induktiv gekoppelt ist und zwischen dem ersten und zweiten Ausgang des Schweißtransformators (30; 30A; 30B) zum Anschluss an eine erste und an eine zweite Schweißelektrode (11, 12) eines Schweißwerkzeugs (10) angeordnet ist, wobei die zweite Sekundärwicklung (33) und die dritte Sekundärwicklung (34) jeweils mit der Primärwicklung (31) induktiv gekoppelt sind, wobei die zweite und dritte Sekundärwicklung (33, 34) jeweils an einem ihrer Anschlüsse mit dem Anschluss der ersten Sekundärwicklung (32) verbunden sind, welcher der zweite Ausgang des Schweißtransformators (30; 30A; 30B) ist und zum Anschluss an die zweite Schweißelektrode (12) des Schweißwerkzeugs (10) vorgesehen ist, bei dem zum Widerstandsschweißen das mindestens eine Bauteil (5, 6) mit den Schweißelektroden (11, 12) zu kontaktieren ist, wobei die zweite Sekundärwicklung (33) an ihrem anderen Anschluss mit dem dritten Ausgang des Schweißtransformators (30; 30A; 30B) verbunden ist, und wobei der Gleichrichter (40) aufweist
einen ersten Gleichrichtzweig (41) zum Gleichrichten eines zwischen der ersten Sekundärwicklung (32) über den ersten Ausgang des Schweißtransformators (30; 30A; 30B) zu der ersten Schweißelektrode (11) fließenden elektrischen Stroms (I₂), einen zweiten Gleichrichtzweig (42) zum Gleichrichten eines zwischen der zweiten Sekundärwicklung (33) über den dritten Ausgang des Schweißtransformators (30; 30A; 30B) zu der ersten Schweißelektrode (11) fließenden elektrischen Stroms (I₂),
wobei ein strombegrenzendes Element (36) mit der dritten Sekundärwicklung (34) an dem vierten Ausgang des Schweißtransformators (30; 30A; 30B) verschaltet ist, um einen elektrischen Strom durch die dritte Sekundärwicklung (34) auf einen vorbestimmten maximalen Wert zu begrenzen.

2. Widerstandsschweißvorrichtung (2; 2A, 2B) nach Anspruch 1, wobei der erste und zweite Gleichrichtzweig (41, 42) jeweils eine Reihenschaltung aus zwei Transistoren aufweisen, die zwischen das Schweißwerkzeug (10) und einen Ausgang des Schweißtransformators (30; 30A; 30B) geschaltet sind, wobei die Polarität des einen Transistors der Reihenschaltung gegenüber der Polarität des anderen Transistors der Reihenschaltung gedreht ist.

3. Widerstandsschweißvorrichtung (2; 2A, 2B) nach Anspruch 2, wobei die zwei Transistoren Metall-Oxid-Halbleiter-Feldeffekttransistoren sind, und wobei der Transistor mit der gedrehten Polarität mit dem Schweißwerkzeug (10) verbunden ist.

4. Widerstandsschweißvorrichtung (2; 2A, 2B) nach einem der Ansprüche 1 bis 3, zudem mit einem dritten Gleichrichtzweig (43) zum Gleichrichten eines zwischen der zweiten Sekundärwicklung (33) und der ersten Schweißelektrode (11) fließenden elektrischen Stroms (I₃).

5. Widerstandsschweißvorrichtung (2; 2A, 2B) nach Anspruch 4, wobei der dritte Gleichrichtzweig (43) eine Reihenschaltung aus zwei Transistoren aufweist, die zwischen das Schweißwerkzeug (10) und einen Ausgang des Schweißtransformators (30; 30A) geschaltet sind, und wobei die Polarität des einen Transistors (42; 44) der Reihenschaltung gegenüber der Polarität des anderen Transistors (41; 43) der Reihenschaltung gedreht ist.

6. Widerstandsschweißvorrichtung (2; 2A, 2B) nach einem der Ansprüche 1 bis 5, wobei das strombegrenzende Element (36) eine steuerbare Induktivität und/oder ein Widerstand ist, die zwischen die dritte Sekundärwicklung (33) und die erste Schweißelektrode (11) geschaltet sind/ist.

7. Widerstandsschweißvorrichtung (2; 2A, 2B) nach einem der Ansprüche 1 bis 5, wobei das strombegrenzende Element (38) ein Halbleiterschalter ist, der zwischen die dritte Sekundärwicklung (34) und die erste Schweißelektrode (11) geschaltet ist.

8. Widerstandsschweißvorrichtung (2; 2A, 2B) nach Anspruch 7, wobei der Halbleiterschalter ein bipolarer Transistor oder ein Metalloxyd-Feldeffekttransistor ist.

9. Widerstandsschweißvorrichtung (2; 2A, 2B) nach Anspruch 7, wobei der Halbleiterschalter ein Thyristor ist, zu dem optional ein antiparaleller Thyristor geschaltet ist.

10. Widerstandsschweißvorrichtung (2; 2A, 2B) nach einem der Ansprüche 1 bis 3, wobei das strombegrenzende Element (38) eine Reihenschaltung aus einer ersten Tunneldiode, zu der eine zweite Tunneldiode antiparallel geschaltet ist, und einem Halbleiterschalter ist, wobei die Reihenschaltung zwischen die dritte Sekundärwicklung (34) und die erste Schweißelektrode (11) geschaltet ist, und wobei der Halbleiterschalter ein bipolarer Transistor oder ein Metalloxyd-Feldeffekttransistor oder ein Thyristor ist.

11. Widerstandsschweißvorrichtung (2; 2A, 2B) nach einem der vorangehenden Ansprüche wobei das Schweißwerkzeug (10) als Schweißzange mit zwei Schweißelektroden (11, 12) ausgestaltet ist, zwischen welchen das mindestens eine Bauteil (5, 6) beim Schweißen angeordnet ist.

12. Widerstandsschweißvorrichtung (2; 2A, 2B) nach Anspruch 11 bei Abhängigkeit von Anspruch 2 oder 3, zudem mit einer Steuereinrichtung (20) zum Schalten der Reihenschaltung aus zwei Transistoren in dem Gleichrichtzweig (41; 42) während einer umrichtergesteuerten Schweißzeit (T₁) in einer ersten Betriebsart (B₁) und zum Schalten der Reihenschaltung aus zwei Transistoren in dem Gleichrichtzweig (41; 42), am Ende der umrichtergesteuerten Schweißzeit (T₁) für eine vorbestimmte Zeitdauer (T₂) in einer zweiten Betriebsart (B₂) die sich von der ersten Betriebsart (B₁) unterscheidet.

13. Widerstandsschweißvorrichtung (2; 2A; 2B) nach Anspruch 12, wobei die erste Betriebsart (B₁) an dem Schweißtransformator (30; 30A, 30B) eine polaritätsumschaltbare Schweißspannung (U₂₁, U₂₂, U₂₃) und einen polaritätsumschaltbaren Schweißstrom (I₂) realisiert, und wobei die zweite Betriebsart (B₂) ein Stromabklingen des Schweißstroms (I₂) beschleunigt, der in der ersten Betriebsart (B₁) erzeugt wurde.

14. Anlage (1) zur Behandlung von Gegenständen (4), mit einer Widerstandsschweißvorrichtung (2; 2A; 2B) nach einem der vorangehenden Ansprüche, wobei die Schweißvorrichtung (2; 2A; 2B) zum Widerstandsschweißen von mindestens einem Bauteil (5, 6) für mindestens einen der Gegenstände (4) vorgesehen ist, wobei die Anlage (1) optional zur Fertigung von Fahrzeugrohkarossen oder Heizkörpern oder Ketten als Gegenstände (4) ausgestaltet ist, und/oder wobei die Anlage (1) optional zur Fertigung von Gegenständen (4) aus mindestens einem Bauteil (5, 6) aus Aluminium ausgestaltet ist, an dem Klebstoff vorhanden sein kann.

15. Widerstandsschweißverfahren zum Widerstandsschweißen von mindestens einem Bauteil (5, 6) mit einem Schweißwerkzeug (10), das mit einer Widerstandsschweißvorrichtung (2; 2A, 2B) nach einem der vorangehenden Ansprüche elektrisch verbunden ist, wobei das Schweißverfahren die Schritte aufweist Kontaktieren des mindestens einen Bauteils (5, 6) mit der ersten und zweiten Schweißelektrode (11, 12) des Schweißwerkzeugs (10), Gleichrichten, mit dem ersten Gleichrichtzweig (41), eines zwischen der ersten Sekundärwicklung (32) und der ersten Schweißelektrode (11) fließenden elektrischen Stroms (I₂), Gleichrichten, mit dem zweiten Gleichrichtzweig (42), eines zwischen der zweiten Sekundärwicklung (33) und der ersten Schweißelektrode (11) fließenden elektrischen Stroms (I₂), und Begrenzen, mit dem strombegrenzenden Element (36, 37), das mit der dritten Sekundärwicklung (34) an dem vierten Ausgang des Schweißtransformators (30; 30A; 30B) verschaltet ist, eines elektrischen Stroms durch die dritte Sekundärwicklung (34) auf einen vorbestimmten maximalen Wert.

## Claims

1. Resistance welding apparatus (2; 2A, 2B) for the resistance welding of at least one component (5, 6), wherein the resistance welding apparatus comprises a welding transformer (30; 30A; 30B) in combination with a rectifier (40), wherein the welding transformer (30; 30A; 30B) comprises
a primary winding (31) for connection to an energy supply (27), and four outputs, between which a first to third secondary winding (32, 33, 34) are arranged, wherein the first secondary winding (32) is inductively coupled to the primary winding (31) and is arranged between the first and second outputs of the welding transformer (30; 30A; 30B) for connection to a first and to a second welding electrode (11, 12) of a welding tool (10), wherein the second secondary winding (33) and the third secondary winding (34) are each inductively coupled to the primary winding (31), wherein the second and third secondary windings (33, 34) are each connected at one of their connections to the connection of the first secondary winding (32), which is the second output of the welding transformer (30; 30A; 30B) and is provided for connection to the second welding electrode (12) of the welding tool (10), in which, for resistance welding, the at least one component (5, 6) is to be contacted with the welding electrodes (11, 12), wherein the second secondary winding (33) is connected at its other connection to the third output of the welding transformer (30; 30A; 30B), and wherein the rectifier (40) comprises
a first rectification branch (41) for rectifying an electric current (I₂) flowing between the first secondary winding (32) via the first output of the welding transformer (30; 30A; 30B) to the first welding electrode (11), a second rectification branch (42) for rectifying an electric current (I₂) flowing between the second secondary winding (33) via the third output of the welding transformer (30; 30A; 30B) to the first welding electrode (11),
wherein a current limiting element (36) is interconnected with the third secondary winding (34) at the fourth output of the welding transformer (30; 30A; 30B) in order to limit an electric current through the third secondary winding (34) to a predetermined maximum value.

2. Resistance welding apparatus (2; 2A, 2B) according to Claim 1, wherein the first and second rectification branches (41, 42) each comprise a series circuit formed by two transistors, which are connected between the welding tool (10) and an output of the welding transformer (30; 30A; 30B), wherein the polarity of one transistor of the series circuit is rotated relative to the polarity of the other transistor of the series circuit.

3. Resistance welding apparatus (2; 2A, 2B) according to Claim 2, wherein the two transistors are metal oxide semiconductor field effect transistors, and wherein the transistor with the rotated polarity is connected to the welding tool (10).

4. Resistance welding apparatus (2; 2A, 2B) according to any of Claims 1 to 3, additionally comprising a third rectification branch (43) for rectifying an electric current (I₃) flowing between the second secondary winding (33) and the first welding electrode (11).

5. Resistance welding apparatus (2; 2A, 2B) according to Claim 4, wherein the third rectification branch (43) comprises a series circuit formed by two transistors, which are connected between the welding tool (10) and an output of the welding transformer (30; 30A), and wherein the polarity of one transistor (42; 44) of the series circuit is rotated relative to the polarity of the other transistor (41; 43) of the series circuit.

6. Resistance welding apparatus (2; 2A, 2B) according to any of Claims 1 to 5, wherein the current limiting element (36) is a controllable inductor and/or a resistor, which are/is connected between the third secondary winding (33) and the first welding electrode (11).

7. Resistance welding apparatus (2; 2A, 2B) according to any of Claims 1 to 5, wherein the current limiting element (38) is a semiconductor switch connected between the third secondary winding (34) and the first welding electrode (11).

8. Resistance welding apparatus (2; 2A, 2B) according to Claim 7, wherein the semiconductor switch is a bipolar transistor or a metal oxide field effect transistor.

9. Resistance welding apparatus (2; 2A, 2B) according to Claim 7, wherein the semiconductor switch is a thyristor, to which an antiparallel thyristor is optionally connected.

10. Resistance welding apparatus (2; 2A, 2B) according to any of Claims 1 to 3, wherein the current limiting element (38) is a series circuit formed by a first tunnel diode, to which a second tunnel diode is connected in antiparallel, and a semiconductor switch, wherein the series circuit is connected between the third secondary winding (34) and the first welding electrode (11), and wherein the semiconductor switch is a bipolar transistor or a metal oxide field effect transistor or a thyristor.

11. Resistance welding apparatus (2; 2A, 2B) according to any of the preceding claims, wherein the welding tool (10) is configured as welding tongs comprising two welding electrodes (11, 12), between which the at least one component (5, 6) is arranged during welding.

12. Resistance welding apparatus (2; 2A, 2B) according to Claim 11 with dependence on Claim 2 or 3, additionally comprising a control device (20) for switching the series circuit formed by two transistors in the rectification branch (41; 42) during a converter-controlled welding time (T₁) in a first operating mode (B₁) and for switching the series circuit formed by two transistors in the rectification branch (41; 42) at the end of the converter-controlled welding time (T₁) for a predetermined time period (T₂) in a second operating mode (B₂), which differs from the first operating mode (B₁).

13. Resistance welding apparatus (2; 2A; 2B) according to Claim 12, wherein the first operating mode (B₁) realizes a polarity-switchable welding voltage (U₂₁, U₂₂, U₂₃) and a polarity-switchable welding current (I₂) at the welding transformer (30; 30A, 30B), and wherein the second operating mode (B₂) accelerates current decay of the welding current (I₂) that was generated in the first operating mode (B₁).

14. Installation (1) for the treatment of objects (4), comprising a resistance welding apparatus (2; 2A; 2B) according to any of the preceding claims, wherein the welding apparatus (2; 2A; 2B) is provided for the resistance welding of at least one component (5, 6) for at least one of the objects (4), wherein the installation (1) is optionally configured for the manufacture of vehicle bodies in white or radiators or chains as objects (4), and/or wherein the installation (1) is optionally configured for the manufacture of objects (4) composed of at least one component (5, 6) composed of aluminium, on which adhesive may be present.

15. Resistance welding method for the resistance welding of at least one component (5, 6) by means of a welding tool (10) electrically connected to a resistance welding apparatus (2; 2A, 2B) according to any of the preceding claims, wherein the welding method comprises the steps of contacting the at least one component (5, 6) with the first and second welding electrodes (11, 12) of the welding tool (10), rectifying, by means of the first rectification branch (41), an electric current (I₂) flowing between the first secondary winding (32) and the first welding electrode (11), rectifying, by means of the second rectification branch (42), an electric current (I₂) flowing between the second secondary winding (33) and the first welding electrode (11), and limiting, by means of the current limiting element (36, 37) interconnected with the third secondary winding (34) at the fourth output of the welding transformer (30; 30A; 30B), an electric current through the third secondary winding (34) to a predetermined maximum value.

## Revendications

1. Dispositif (2 ; 2A, 2B) de soudage par résistance pour le soudage par résistance d'au moins un composant (5, 6), le dispositif de soudage par résistance comprenant un transformateur de soudage (30 ; 30A ; 30B) en combinaison avec un redresseur (40), le transformateur de soudage (30 ; 30A ; 30B) comportant
un enroulement primaire (31) destiné à être connecté à une alimentation en énergie (27), et quatre sorties entre lesquelles sont disposés des premier à troisième enroulements secondaires (32, 33, 34), le premier enroulement secondaire (32) étant couplé par induction à l'enroulement primaire (31) et étant disposé entre les première et deuxième sorties du transformateur de soudage (30 ; 30A ; 30B) pour la connexion à une première et à une deuxième électrode de soudage (11, 12) d'un outil de soudage (10), le deuxième enroulement secondaire (33) et le troisième enroulement secondaire (34) étant respectivement couplés par induction à l'enroulement primaire (31), les deuxième et troisième enroulements secondaires (33, 34) étant respectivement connectés par l'une de leurs bornes à la borne du premier enroulement secondaire (32), qui est la deuxième sortie du transformateur de soudage (30 ; 30A ; 30B) et est prévue pour la connexion à la deuxième électrode de soudage (12) de l'outil de soudage (10), dans lequel, pour le soudage par résistance, ledit au moins un composant (5, 6) doit être mis en contact avec les électrodes de soudage (11, 12), le deuxième enroulement secondaire (33) étant connecté, par son autre borne, à la troisième sortie du transformateur de soudage (30 ; 30A ; 30B), et le redresseur (40) comportant
une première branche de redressement (41) pour redresser un courant électrique (I₂) circulant entre le premier enroulement secondaire (32), par l'intermédiaire de la première sortie du transformateur de soudage (30 ; 30A ; 30B), et la première électrode de soudage (11), une deuxième branche de redressement (42) pour redresser un courant électrique (I₂) circulant entre le deuxième enroulement secondaire (33), par l'intermédiaire de la troisième sortie du transformateur de soudage (30 ; 30A ; 30B), et la première électrode de soudage (11),
un élément limiteur de courant (36) étant connecté au troisième enroulement secondaire (34) par la quatrième sortie du transformateur de soudage (30 ; 30A ; 30B) pour limiter un courant électrique circulant à travers le troisième enroulement secondaire (34) à une valeur maximale prédéterminée.

2. Dispositif (2 ; 2A, 2B) de soudage par résistance selon la revendication 1, dans lequel les première et deuxième branches de redressement (41, 42) comportent respectivement un montage en série de deux transistors qui sont connectés entre l'outil de soudage (10) et une sortie du transformateur de soudage (30 ; 30A ; 30B), la polarité d'un transistor du montage en série étant tournée par rapport à la polarité de l'autre transistor du montage en série.

3. Dispositif (2 ; 2A, 2B) de soudage par résistance selon la revendication 2, dans lequel les deux transistors sont des transistors à effet de champ métal-oxyde-semiconducteur, et dans lequel le transistor à polarité tournée est connecté à l'outil de soudage (10).

4. Dispositif (2 ; 2A, 2B) de soudage par résistance selon l'une des revendications 1 à 3, comportant en outre une troisième branche de redressement (43) pour redresser un courant électrique (I₃) circulant entre le deuxième enroulement secondaire (33) et la première électrode de soudage (11).

5. Dispositif (2 ; 2A, 2B) de soudage par résistance selon la revendication 4, dans lequel la troisième branche de redressement (43) comprend un montage en série de deux transistors qui sont connectés entre l'outil de soudage (10) et une sortie du transformateur de soudage (30 ; 30A), et dans lequel la polarité d'un transistor (42 ; 44) du montage en série est tournée par rapport à la polarité de l'autre transistor (41 ; 43) du montage en série.

6. Dispositif (2 ; 2A, 2B) de soudage par résistance selon l'une des revendications 1 à 5, dans lequel l'élément limiteur de courant (36) est une inductance commandable et/ou une résistance connectée entre le troisième enroulement secondaire (33) et la première électrode de soudage (11).

7. Dispositif (2 ; 2A, 2B) de soudage par résistance selon l'une des revendications 1 à 5, dans lequel l'élément limiteur de courant (38) est un commutateur à semiconducteur qui est connecté entre le troisième enroulement secondaire (34) et la première électrode de soudage (11).

8. Dispositif (2 ; 2A, 2B) de soudage par résistance selon la revendication 7, dans lequel le commutateur à semiconducteur est un transistor bipolaire ou un transistor à effet de champ à oxyde métallique.

9. Dispositif (2 ; 2A, 2B) de soudage par résistance selon la revendication 7, dans lequel le commutateur à semiconducteur est un thyristor auquel est facultativement connecté un thyristor antiparallèle.

10. Dispositif (2 ; 2A, 2B) de soudage par résistance selon l'une des revendications 1 à 3, dans lequel l'élément limiteur de courant (38) est un montage en série d'une première diode tunnel, à laquelle est connectée en antiparallèle une deuxième diode tunnel, et d'un commutateur à semiconducteur, le montage en série étant connecté entre le troisième enroulement secondaire (34) et la première électrode de soudage (11), et dans lequel le commutateur à semiconducteur est un transistor bipolaire ou un transistor à effet de champ à oxyde métallique ou un thyristor.

11. Dispositif (2 ; 2A, 2B) de soudage par résistance selon l'une des revendications précédentes, dans lequel l'outil de soudage (10) est conçu sous la forme d'une pince de soudage comportant deux électrodes de soudage (11, 12) entre lesquelles ledit au moins un composant (5, 6) est disposé lors du soudage.

12. Dispositif (2 ; 2A, 2B) de soudage par résistance selon la revendication 11 lorsqu'elle dépend de la revendication 2 ou 3, comportant en outre un dispositif de commande (20) pour connecter le montage en série de deux transistors dans la branche de redressement (41 ; 42) pendant un temps de soudage commandé par convertisseur (T₁) dans un premier mode de fonctionnement (B₁) et pour connecter le montage en série de deux transistors dans la branche de redressement (41 ; 42), à la fin du temps de soudage commandé par convertisseur (T₁), pendant une durée prédéterminée (T₂) dans un deuxième mode de fonctionnement (B₂) qui est différent du premier mode de fonctionnement (B₁).

13. Dispositif (2 ; 2A ; 2B) de soudage par résistance selon la revendication 12, dans lequel le premier mode de fonctionnement (B₁) réalise, au niveau du transformateur de soudage (30 ; 30A, 30B), une tension de soudage (U₂₁, U₂₂, U₂₃) à polarité commutable et un courant de soudage (I₂) à polarité commutable, et dans lequel le deuxième mode de fonctionnement (B₂) accélère une décroissance de courant du courant de soudage (I₂) qui a été généré dans le premier mode de fonctionnement (B₁).

14. Installation (1) pour le traitement d'objets (4), comprenant un dispositif (2 ; 2A ; 2B) de soudage par résistance selon l'une des revendications précédentes, le dispositif (2 ; 2A ; 2B) de soudage par résistance étant prévu pour souder par résistance au moins un composant (5, 6) pour au moins l'un des objets (4), l'installation (1) étant facultativement conçue pour la fabrication de carrosseries de véhicules ou de corps chauffants ou de chaînes en tant qu'objets (4), et/ou l'installation (1) étant facultativement conçue pour fabriquer des objets (4) à partir d'au moins un composant (5, 6) constitué d'aluminium, sur lequel un adhésif peut être présent.

15. Procédé de soudage par résistance pour le soudage par résistance d'au moins un composant (5, 6) au moyen d'un outil de soudage (10), qui est relié électriquement à un dispositif (2 ; 2A, 2B) de soudage par résistance selon l'une des revendications précédentes, le procédé de soudage comprenant les étapes consistant à mettre en contact ledit au moins un composant (5, 6) avec les première et deuxième électrodes de soudage (11, 12) de l'outil de soudage (10), à redresser, au moyen de la première branche de redressement (41), un courant électrique (I₂) circulant entre le premier enroulement secondaire (32) et la première électrode de soudage (11), à redresser, au moyen de la deuxième branche de redressement (42), un courant électrique (I₂) circulant entre le deuxième enroulement secondaire (33) et la première électrode de soudage (11), et à limiter, au moyen de l'élément limiteur de courant (36, 37) qui est connecté au troisième enroulement secondaire (34) par la quatrième sortie du transformateur de soudage (30 ; 30A ; 30B), un courant électrique circulant à travers le troisième enroulement secondaire (34) à une valeur maximale prédéterminée.
